Europäisches Patentamt

European Patent Office

Office européen des brevets

(11) Veröffentlichungsnummer: **0 385 117**
**A2**

## (12) EUROPÄISCHE PATENTANMELDUNG

(21) Anmeldenummer: **90101797.0**

(51) Int. Cl.⁵: **F16B 13/06**

(22) Anmeldetag: **30.01.90**

(30) Priorität: **28.02.89 DE 8902332 U**

(43) Veröffentlichungstag der Anmeldung:
**05.09.90 Patentblatt 90/36**

(84) Benannte Vertragsstaaten:
**AT CH DE ES FR GB IT LI NL**

(71) Anmelder: **Eischeid, Karl**
**Schulweg 23**
**D-5250 Engelskirchen(DE)**

(72) Erfinder: **Eischeid, Karl**
**Schulweg 23**
**D-5250 Engelskirchen(DE)**

(74) Vertreter: **Sturies, Herbert et al**
**Patentanwälte Dr. Ing. Dipl. Phys. Herbert**
**Sturies Dipl. Ing. Peter Eichler**
**Brahmsstrasse 29, Postfach 20 12 42**
**D-5600 Wuppertal 2(DE)**

(54) **Spreizdübel für Hinterschnittbohrungen.**

(57) Spreizdübel (1) für Hinterschnittbohrungen (2), mit einer etwa bohrungslangen Dübelhülse (3), die an ihrem hinterschnittseitigen Ende (4) mehrfach längsgeschlitzt ist und im Schlitzendbereich im Außenumfang eine umlaufende Ringnut hat, und mit einem lose innerhalb der Dübelhülse (3) konzentrisch angeordneten Bolzen, der an einem Ende (9) ein Befestigungsgewinde (10) und am anderen, hinterschnittseitigen Ende (11) einen die durch die Längsschlitze des zugehörigen Hülsenendes (4) gebildeten Spreizlappen (13) der Dübelhülse (3) mit einer Spreizfläche spreizenden Spreizkörper (15) mit einem dem Hülsenaußendurchmesser entsprechenden Durchmesser hat.

Um einen Spreizdübel (1) der eingangs genannten Art so zu verbessern, daß er bei einfacher Ausbildung auch dann unproblematisch eingesetzt werden kann, wenn die Hinterschneidung der Wand von der theoretisch notwendigen Ausbildung abweicht, wird er so ausgebildet, daß die Spreizfläche des Spreizkörpers (15) zur Dübelachse (18) etwa senkrecht angeordnet ist und mit der Stirnfläche des hinterschnittseitigen Hülsenendes (4) einen spitzen Winkel einschließt.

FIG.4

## Spreizdübel für Hinterschnittbohrungen

Die Erfindung bezieht sich auf einen Spreizdübel für Hinterschnittbohrungen, mit einer etwa bohrungslangen Dübelhülse, die an ihrem hinterschnittseitigen Ende mehrfach längsgeschlitzt ist und im Schlitzendbereich im Außenumfang eine umlaufende Ringnut hat, und mit einem lose innerhalb der Dübelhülse konzentrisch angeordneten Bolzen, der an einem Ende ein Befestigungsgewinde und am anderen, hinterschnittseitigen Ende einen die durch die Längsschlitze des zugehörigen Hülsenendes gebildeten Spreizlappen der Dübelhülse mit einer Spreizfläche spreizenden Spreizkörper mit einem dem Hülsenaußendurchmesser entsprechenden Durchmesser hat.

Bei einem allgemein bekannten Spreizdübel dieser Art, der für Schwerbefestigungen eingesetzt wird, ist der Spreizkörper zum offenen Ende der Hinterschnittbohrung konisch ausgebildet. Diese Konizität entspricht etwa der Konizität der Hinterschneidung der Wand, in der der Spreizdübel verankert werden soll. Die Verankerung erfolgt, indem die Dübelhülse mit ihren Spreizlappen auf den konischen, in der mit einer Hinterschneidung versehenen Bohrung angeordneten Spreizkörper aufgeschoben wird, welcher die Spreizlappen in die Hinterschneidung spreizt. Wenn zwischen dem konischen Spreizkörper und der Wand nicht genügend Freiraum zum Aufnehmen der Spreizlappen vorhanden ist, oder wenn der Freiraum zu groß ist, kann es zu Störungen oder zu losem Sitz des Spreizdübels kommen. Auch ist die Konizität des Spreizkörpers grundsätzlich unerwünscht.

Aus der DE-OS 35 36 518 ist ein Schlagspreizdübel bekannt, der aus einer etwa bohrungslangen Dübelhülse besteht, die an ihrem hinterschnittseitigen Ende mehrfach längsgeschlitzt ist und im Schlitzendbereich im Außenumfang eine umlaufende Ringnut hat. Die durch die Längsschlitze des Hülsenendes gebildeten Spreizlappen sind durch eine quer zur Achse angeordnete Ringnut in ungleich lange Spreizlappenlängsabschnitte unterteilt. Die bodenseitigen Spreizlappenlängsabschnitte sind in Richtung auf den Boden zugespitzt. Außerdem sind bei diesem bekannten Schlagspreizdübel unmittelbar vor den Spreizlappen im Inneren der Hülse Wulste vorhanden, auf denen ein Dorn aufsitzen kann, um den Dübel schlagend in die Wandbohrung einzutreiben. Dabei stützen sich die äußersten, bohrungsbodenseitigen Spreizlappenlängsabschnitte aneinander ab und die Spreizlappen knicken so auseinander, daß sie zum Teil in die Hinterschneidung der Wand gelangen, wobei die äussersten Spreizlappenlängsabschnitte infolge ihrer entsprechenden Bemessung senkrecht zur Mittelachse angeordnet sind.

Aufgrund ihrer Zuspitzung und ihrer zur Mittelachse senkrechten Anordnung bilden die bodenseitigen Spreizlappenlängsabschnitte einen planen Boden. Voraussetzung für die korrekte Funktion des bekannten Schlagspreizdübels ist es jedoch, daß die Hinterschneidung in der Wand exakt auf die Dübelhülse abgestimmt ist. Es stellt sich sonst nicht die gewünschte Verformungsgeometrie der Hülse ein.

Dem Bekannten gegenüber liegt der Erfindung die Aufgabe zugrunde, einen Spreizdübel der eingangs genannten Art so zu verbessern, daß er bei einfacher Ausbildung auch dann unproblematisch eingesetzt werden kann, wenn die Hinterschneidung der Wand von der theoretisch notwendigen Ausbildung abweicht.

Diese Aufgabe wird dadurch gelöst, daß die Spreizfläche des Spreizkörpers zur Dübelachse etwa senkrecht angeordnet ist und mit der Stirnfläche des hinterschnittseitigen Hülsenendes einen spitzen Winkel einschließt.

Für die Erfindung ist von Bedeutung, daß die Spreizfläche des Spreizkörpers nicht mehr konisch ist, sondern senkrecht zur Dübelachse. Es entsteht infolgedessen ein äußerst einfacher Bolzen, der nur mehr zylindrische Umfangsflächen aufzuweisen braucht. Insbesondere kann der Spreizkörper außerhalb des Bereichs seiner Spreizfläche zylindrisch ausgebildet sein. Er ist infolgedessen ein einfach herzustellender zylindrischer Bolzenkopf. Des weiteren ist von Vorteil, daß die Spreizfläche des Spreizkörpers mit der Stirnfläche des hinterschnittseitigen Hülsenendes einen spitzen Winkel einschließt. Dadurch wird beim Einschlagen oder beim Einpressen der Dübelhülse das etwa in der Mitte der Spreizlappen erfolgende Ausknicken der Spreizlappen nach außen in die Hinterschneidung der Wand unterstützt, weil zunächst die axial äußerste Schneide des Hülsenendes auf der Spreizfläche zur Auflage kommt und ein weiteres Schlagen oder Drücken der Dübelhülse bewirkt, daß die Lappen um die Schneide als Drehpunkt von der Achse weg nach außen kippen. Es erfolgt eine Ausbeulung der Spreizlappen, bei der die hülsenendseitigen und die schlitzendbereichseitigen Enden der Spreizlappen nahe am Bolzen positioniert bleiben und die dazwischen gelegenen Spreizlappenabschnitte in die Hinterschneidung hineinverformt werden, wobei sie sich ohne weiteres der durch die Hinterschneidung gegebenen Form anpassen können. Dadurch wird die Funktionsunabhängigkeit des Spreizdübels von der Form der Hinterschneidung gewährleistet.

Durch die Ausbildung der Stirnfläche des hinterschnittseitigen Hülsenendes mit spitzem Winkel zur Spreizfläche des Spreizkörpers wird außerdem vermieden, daß sich die Spreizlappen hülsenendseitig nach außen verformen und beispielsweise in den Bereich zwischen dem Außenumfang des Spreizkörpers und der Wand gelangen, sei es, daß diese dort zu groß gebohrt ist, oder daß sich die Stirnfläche des hinterschnittseitigen Hülsenendes beim Einschlagen oder Hineinpressen der Dübelhülse in den Wandwerkstoff eingräbt.

Vorteilhafterweise ist der Spreizdübel so ausgebildet, daß die Spreizfläche des Spreizkörpers ringförmig und mit einer Ringbreite ausgebildet ist, die der Wandstärke der Dübelhülse etwa entspricht. Die Ringförmigkeit der Spreizfläche entspricht der Ringförmigkeit des Dübelendes, und auch die Ringbreite des Spreizkörpers ist auf die Wandstärke der Dübelhülse abgestimmt, so daß sich optimale Abstützverhältnisse ergeben.

Um die Spitzwinkligkeit zwischen der Stirnfläche des hinterschnittenen Hülsenendes und der Spreizfläche des Spreizkörpers mit einfachen Mitteln zu erreichen, ist der Spreizdübel so ausgebildet, daß die Stirnfläche des hinterschnittseitigen Hülsenendes in Richtung auf den Spreizkörper konisch verjüngt ist. Dadurch kann die Spreizfläche des Spreizkörpers exakt senkrecht zur Dübelachse angeordnet werden und die Abschrägung des hinterschnittseitigen Hülsenendes zur Erzielung des spitzen Winkels bietet keine Herstellungsprobleme.

Um das Ausspreizen der Spreizlappen in demjenigen Sinn zu erleichtern, daß die hülsenendseitigen und die im Schlitzendbereich gelegenen Spreizlappenenden bolzennah bleiben, ist der Spreizdübel so ausgebildet, daß die Spreizlappen zwischen ihrer im Außenumfang umlaufenden Ringnut und ihrer hinterschnittseitigen Stirnfläche eine an ihrem Innenumfang umlaufende Ringnut aufweisen. Die Ringnut erleichtert das Ausknikken der Spreizlappen und verringert die Eintreibkräfte für die Dübelhülse bei der Montage des Dübels.

Wenn der Ringquerschnitt der ringförmigen Hinterschneidung der Hinterschnittbohrung dreieckförmig ist, und zwar mit ungleich langen Wandseiten, so kann der Spreizdübel an diese Ausgestaltung der Hinterschneidung dadurch angepaßt werden, daß sich die innen umlaufende Ringnut in einer ungleich lange Spreizlappenlängsabschnitte bewirkenden Anordnung zwischen der hinterschnittseitigen Stirnfläche und der im Außenumfang der Dübelhülse umlaufenden Ringnut befindet. Dabei versteht es sich, daß die Unterteilung der Spreizlappenlängsabschnitte der Querschnittsgestaltung der Hinterschneidung angepaßt wird. Nach dem Eintreiben der Dübelhülse sind die Spreizlappen der art formschlüssig in die Hinterschneidung der Wand eingedrungen, daß sich ein für die konstruktiv vorgesehenen Belastungskräfte unlösbarer Dübelsitz ergibt.

Die Erfindung wird anhand eines in der Zeichnung dargestellten Ausführungsbeispiels erläutert. Es zeigt:

Fig.1 eine Seitenansicht des Bolzens,

Fig.2 eine Schnittdarstellung der unverformten Dübelhülse,

Fig.3 eine Schnittdarstellung der verformten Dübelhülse, und

Fig.4 den in eine Wand eingebauten Spreizdübel.

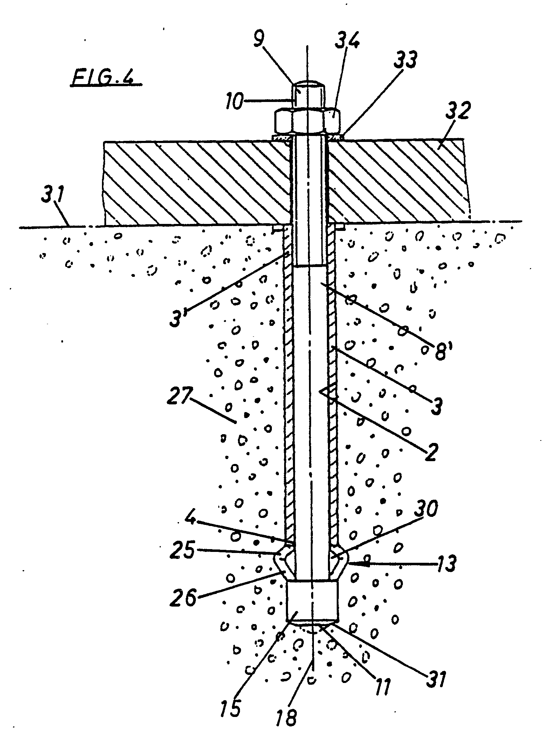

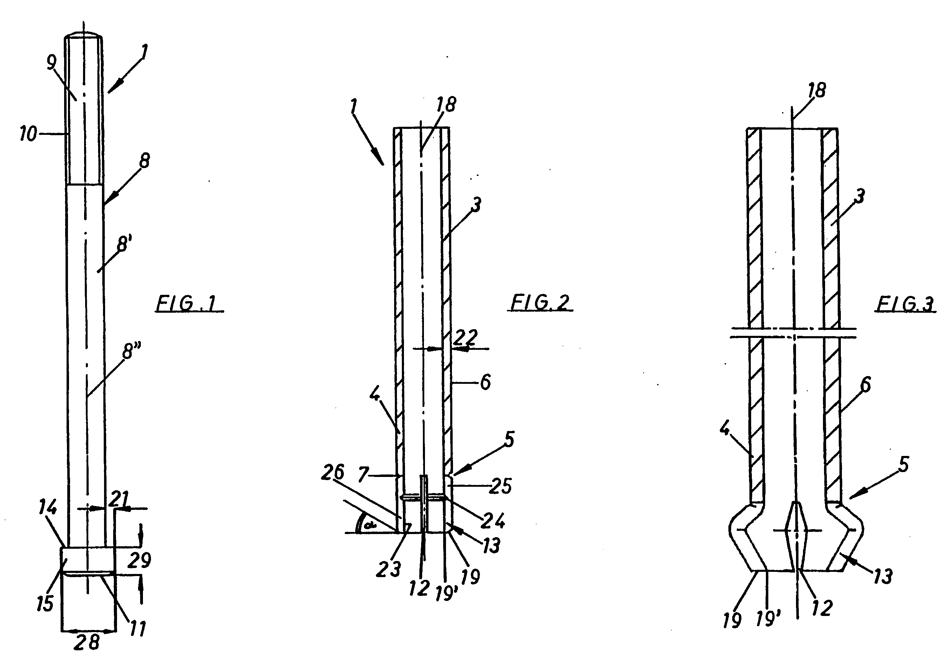

Der Spreizdübel 1 besteht im wesentlichen aus den in den Fig.1,2 dargestellten Teilen, nämlich einem Bolzen 8 und einer Dübelhülse 3.

Der Bolzen 8 ist beispielsweise ein aus Stahl bestehender Stift, der an einem Ende 9 ein Befestigungsgewinde 10 aufweist. Am anderen Ende 11 ist ein Spreizkörper 15 vorhanden, der einen kreiszylindrischen Querschnitt aufweist und konzentrisch angeordnet ist. Der Durchmesser des kreiszylindrischen Spreizkörpers 15 ist größer, als derjenige des Bolzenschafts $8'$, so daß der Bolzenkörper 15 eine ringförmige Spreizfläche 14 hat. Diese Spreizfläche 14 ist senkrecht zur Bolzenachse $8''$ und damit senkrecht zur Dübelachse 18 gemäß Fig.4 angeordnet.

Aus Fig.4 ist ersichtlich, daß der in die Bohrung 2 der Wand 27 eingebaute Bolzen 8 hinsichtlich seines Spreizkörpers 15 auf die Form der Bohrung 2 abgestimmt ist. Insbesondere entspricht sein Durchmesser 28 etwa dem Bohrungsdurchmesser im Aufnahmebereich der Bohrung 2 und seine Länge 29 ist auf die Länge der Bohrung 2 zwischen einer Hinterschneidung 30 und dem Bohrungsboden 31 abgestimmt, auf dem sich das hinterschnittseitige Ende 11 des Bolzens 8 abstützt.

Die in Fig.2 dargestellte Dübelhülse 3 hat ein hinterschnittseitiges Ende 4, das mehrfach längsgeschlitzt ist. Die Längsschlitze 12 unterteilen die Dübelhülse 3 in diesem Bereich in mehrere Spreizlappen 13. Im Außenumfang 6 der Dübelhülse 3 ist im Schlitzendbereich 5 eine umlaufende Ringnut 7 vorhanden. Außerdem ist die Dübelhülse 3 im Bereich ihrer Spreizlappen 13 am Innenumfang 23 mit einer umlaufenden Ringnut 24 versehen, so daß dementsprechend zwischen der Ringnut 7 und der hinterschnittseitigen Stirnfläche 19 der Dübelhülse 3 Spreizlappenlängsabschnitte 25,26 gebildet sind. Diese sind ungleich lang. Die Stirnfläche 19 des hinterschnittseitigen Hülsenendes 4 bzw. der Spreizlappen 13 ist konisch verjüngt, und zwar derart, daß sich der aus Fig.2 ersichtliche spitze Winkel $\alpha$ zwischen der Stirnfläche 19 und einer Senkrechten zur Hülsen- bzw. Dübelachse 18 ergibt.

Die Wandstärke 22 der Dübelhülse 3 entspricht etwa der Ringbreite 21 der Spreizfläche 14 des Spreizkörpers 15, wie sich aus der Zusammenbauzeichnung der Fig.4 ergibt, die erkennen läßt, daß die Wandstärke 22 etwa gleich der Stärke des Zwischenraums zwischen dem Schaft 8' und der Innenwand der Bohrung 2 ist.

Wird die Dübelhülse 3 mit dem Bolzen 8 zusammengebaut, so sitzt die Stirnfläche 19 mit ihrer ringförmigen Schneide 19', die lediglich durch die Längsschlitze 12 unterbrochen ist, auf der Stirnfläche 14 des Bolzens 8 auf. Es ergibt sich ein entsprechender spitzer Winkel α zwischen der Stirnfläche 19 und der Spreizfläche 14.

Beim Einbau des Spreizdübels wird die Hülse 3 auf den Bolzen 8 gesteckt und beide Teile werden gemeinsam in die Hinterschnittbohrung 2 hineingesteckt. Die Dübelhülse 3 ragt dabei etwas aus der Bohrung 2 hervor und liegt erst dann mit ihrem Ende 3' bündig mit der Wandaußenfläche 31, wenn sie in die Position der Fig.4 geschlagen oder z.B. mit dem zu befestigenden Teil 32 gedrückt wurde, indem eine Befestigungsmutter 34 auf das Gewinde 10 des Bolzens 8 geschraubt wurde und über eine Zwischenlagscheibe 33 entsprechende Preßkräfte auf das Teil 32 und damit auf die Dübelhülse 3 ausgeübt wurden.

Die Spreizlappen 13 der Dübelhülse 3 sind in die Hinterschneidung 30 durch Verformung eingedrungen und haben sich der Form der Hinterschneidung 30 angepaßt. Hierzu ist der Spreizlappenlängsabschnitt 25 kürzer bemessen, als der Spreizlappenlängsabschnitt 26, und zwar in Anpassung an die entsprechend bemessenen Wandlängen der Hinterschneidung 30, die der Zeichnung entsprechend unterschiedlich lang sind. Die Ringnuten 7, 24 haben die Ausformung der Spreizlappen 13 erleichtert. Die Anordnung der Ringnut 24 ermöglicht es, den Dübel an unterschiedlich gestaltete Hinterschneidungen anzupassen. Durch die Ringnut 24 kann also die Krafteinleitung in den Beton auf den Winkel der Tragfläche der Hinterschneidung 30 abgestimmt werden.

Aus Fig.3 ist ersichtlich, daß die Stirnfläche 19 des hinterschnittseitigen Hülsenendes 4 nach der Verformung der Spreizlappen 13 etwa senkrecht zur Hülsenachse 18 angeordnet ist und damit gemäß Fig.3 flach auf der Spreizfläche 14 des Spreizkörpers 15 aufliegen. Die Schneiden 19' sind dort angeordnet, wo die Spreizfläche 14 und der Bolzenschaft 8' zusammenstoßen, so daß sich eine gute Positionierung der Spreizlappen 13 ergibt.

## Ansprüche

1. Spreizdübel (1) für Hinterschnittbohrungen (2), mit einer etwa bohrungslangen Dübelhülse (3), die an ihrem hinterschnittseitigen Ende (4) mehrfach längsgeschlitzt ist und im Schlitzendbereich (5) im Außenumfang (6) eine umlaufende Ringnut (7) hat, und mit einem lose innerhalb der Dübelhülse (3) konzentrisch angeordneten Bolzen (8), der an einem Ende (9) ein Befestigungsgewinde (10) und am anderen, hinterschnittseitigen Ende (11) einen die durch die Längsschlitze (12) des zugehörigen Hülsenendes (4) gebildeten Spreizlappen (13) der Dübelhülse (3) mit einer Spreizfläche (14) spreizenden Spreizkörper (15) mit einem dem Hülsenaußendurchmesser entsprechenden Durchmesser (28) hat, **dadurch gekennzeichnet, daß** die Spreizfläche (14) des Spreizkörpers (15) zur Dübelachse (18) etwa senkrecht angeordnet ist und mit der Stirnfläche (19) des hinterschnittseitigen Hülsenendes (4) einen spitzen Winkel (α) einschließt.

2. Spreizdübel nach Anspruch 1, **dadurch gekennzeichnet, daß** die Spreizfläche (14) des Spreizkörpers (15) ringförmig und mit einer Ringbreite (21) ausgebildet ist, die der Wandstärke (22) der Dübelhülse (3) etwa entspricht.

3. Spreizdübel nach Anspruch 1 oder 2, **dadurch gekennzeichnet, daß** die Stirnfläche (19) des hinterschnittseitigen Hülsenendes (4) in Richtung auf den Spreizkörper (15) konisch verjüngt ist.

4. Spreizdübel nach einem oder mehreren der Ansprüche 1 bis 3, **dadurch gekennzeichnet, daß** die Spreizlappen (13) zwischen ihrer im Außenumfang (6) umlaufenden Ringnut (7) und ihrer hinterschnittseitigen Stirnfläche (19) eine an ihrem Innenumfang (23) umlaufende Ringnut (24) aufweisen.

5. Spreizdübel nach Anspruch 4, **dadurch gekennzeichnet, daß** sich die innen umlaufende Ringnut (24) in einer ungleich lange Spreizlappenlängsabschnitte (25,26) bewirkenden Anordnung zwischen der hinterschnittseitigen Stirnfläche (14) und der im Außenumfang (6) der Dübelhülse (3) umlaufenden Ringnut (7) befindet.

*FIG.4*

FIG.1

FIG.2

FIG.3